# FASCICULE DE BREVET EUROPEEN

(11) **EP 2 301 805 B1**
(45) Date de publication et mention de la délivrance du brevet: **19.06.2013**
(21) Numéro de dépôt: 10290510.6
(22) Date de dépôt: 27.09.2010
(51) Int. Cl.: B60R 5/04

(54) **Dispositif de recouvrement d'un compartiment à bagages de véhicule automobile**
Laderaumabdeckung eines Kraftfahrzeuges.
Device for covering the luggage compartment of a motor vehicle.

(30) Priorité: 28.09.2009 FR 0904621
(43) Date de publication de la demande: 30.03.2011
(73) Titulaire: Centre d'étude et de recherche pour l'automobile (CERA), 51100 Reims (FR)
(72) Inventeur: Brillon, Eric, 51140 Treslon (FR); Montagne, Frédéric, 51150 Tours sur Marne (FR); Guenamant, Nicolas, 08310 Machault (FR)
(74) Mandataire: Sayettat, Julien Christian

(56) Documents cités:
- EP-A1- 0 028 184
- EP-A1- 0 041 016
- EP-A1- 1 120 315
- EP-A2- 1 876 056
- FR-A1- 2 875 454
- JP-A- 2000 255 322

## Description

L'invention concerne un dispositif de recouvrement d'un compartiment à bagages de véhicule automobile.

Il est connu de réaliser un dispositif de recouvrement d'un compartiment à bagages de véhicule automobile pourvu d'un hayon, ledit dispositif comprenant une tablette de recouvrement montée en articulation selon son bord avant par rapport audit compartiment, ladite tablette présentant :
- une position d'accès aux bagages, où ladite tablette est inclinée par relèvement de son bord arrière,
- une position de recouvrement, où ladite tablette est sensiblement horizontale,
les bordures latérales de ladite tablette prenant appui sur des surfaces d'appui issues de parois - ou éléments de parois - latérales du compartiment à bagages. Les surfaces d'appui forment moyens de butée empêchant une rotation de la tablette de sa position de recouvrement vers le bas. Les surfaces d'appui peuvent notamment être intégrées à des ébénisteries latérales formant éléments de parois latérales.

Il est notamment prévu que le hayon soit relié à la tablette, en particulier par un jeu de cordons, de sorte que l'ouverture dudit hayon provoque par rotation un relèvement du bord arrière de ladite tablette. Un tel dispositif est connu du document JP-A-A-2000-255 322.

Dans un tel agencement, les surfaces d'appui empiètent sur la largeur du compartiment à bagages, ce qui diminue par conséquent l'espace de rangement desdits bagages.

L'invention a notamment pour but de pallier cet inconvénient.

A cet effet, l'invention propose un dispositif de recouvrement d'un compartiment à bagages de véhicule automobile pourvu d'un hayon, ledit dispositif comprenant une tablette de recouvrement montée en articulation selon son bord avant par rapport audit compartiment, ladite tablette présentant :
- une position d'accès aux bagages, où ladite tablette est inclinée par relèvement de son bord arrière,
- une position de recouvrement, où ladite tablette est sensiblement horizontale,
- une position d'escamotage, où ladite tablette est rabattue par abaissement de son bord arrière,
ledit dispositif comprenant :
- un moyen de positionnement réversible de ladite tablette en position de recouvrement,
- un moyen de butée empêchant une rotation de ladite tablette de sa position de recouvrement vers sa position d'escamotage, ledit moyen de butée étant disposé sur ledit hayon et étant activé par fermeture dudit hayon alors que ladite tablette est positionnée par ledit moyen de positionnement en position de recouvrement.

Dans cette description, les termes de positionnement dans l'espace (bas, latéral, avant, arrière, vertical, horizontal,...) sont pris en référence au dispositif disposé dans le véhicule.

L'agencement proposé permet d'assurer un blocage de la tablette en position de recouvrement par appui de la tablette sur un moyen de butée n'empiétant pas sur la largeur du compartiment à bagages.

D'autres particularités et avantages de l'invention apparaîtront dans la description qui suit, faite en référence aux figures jointes dans lesquelles :

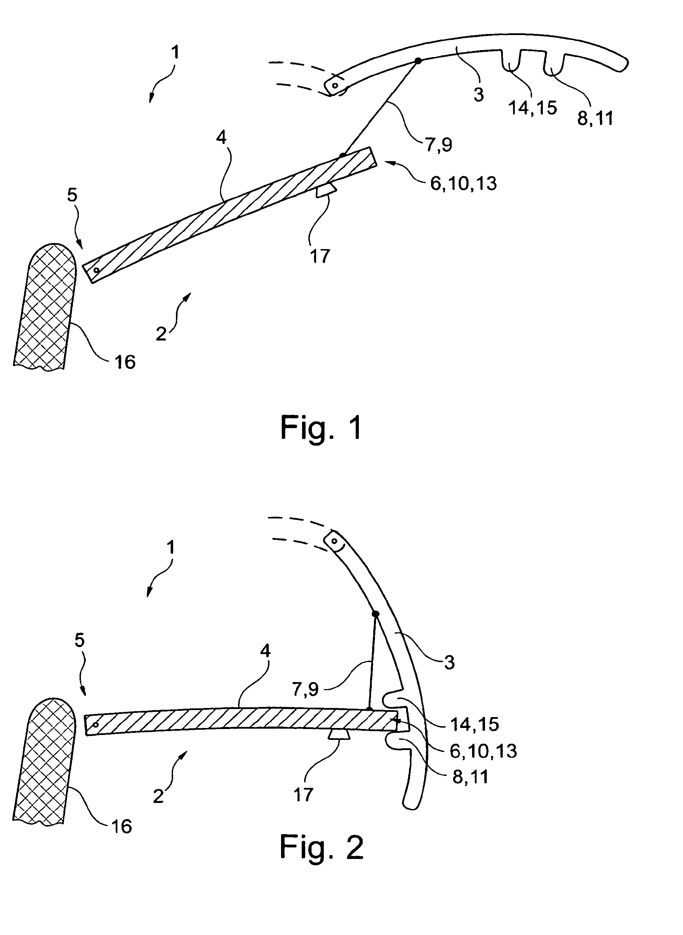

- la figure 1 est une vue schématique latérale d'un dispositif selon une réalisation, le hayon étant ouvert et la tablette étant en position d'accès aux bagages,
- la figure 2 est une vue schématique latérale du dispositif de la figure 1, le hayon étant fermé et la tablette étant en position de recouvrement,

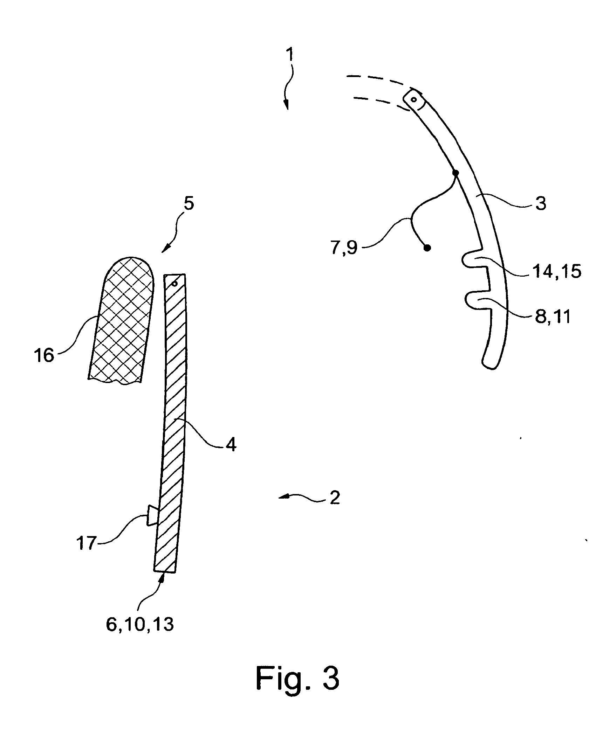

- la figure 3 est une vue schématique latérale du dispositif de la figure 1, le hayon étant fermé et la tablette étant en position d'escamotage.

En référence aux figures, on décrit un dispositif 1 de recouvrement d'un compartiment à bagages 2 de véhicule automobile pourvu d'un hayon 3, ledit dispositif comprenant une tablette 4 de recouvrement montée en articulation selon son bord avant 5 par rapport audit compartiment, ladite tablette présentant :
- une position d'accès aux bagages, où ladite tablette est inclinée par relèvement de son bord arrière 6,
- une position de recouvrement, où ladite tablette est sensiblement horizontale,
- une position d'escamotage, où ladite tablette est rabattue par abaissement dudit bord arrière, ce qui permet un rangement de ladite tablette quand elle n'est pas utilisée,
ledit dispositif comprenant :
- un moyen de positionnement 7 réversible de ladite tablette en position de recouvrement,
- un moyen de butée 8 empêchant une rotation de ladite tablette de sa position de recouvrement vers sa position d'escamotage, ledit moyen de butée étant disposé sur ledit hayon et étant activé par fermeture dudit hayon alors que ladite tablette est positionnée par ledit moyen de positionnement en position de recouvrement.

Un hayon 3 est défini comme étant une porte arrière d'accès au compartiment à bagages, ladite porte étant montée à la structure du véhicule en articulation, notamment selon son bord supérieur.

La tablette 4 peut notamment être montée en articulation au moyen d'axes saillant latéralement de ses coins avant et s'insérant dans des logements prévus sur des ébénisteries latérales du compartiment à bagages. En variante, les coins avant de la tablette 4 peuvent être conformés pour pouvoir être introduits dans des moyens de réception prévus sur des ébénisteries latérales, ce qui évite d'utiliser des axes qui peuvent présenter une certaine fragilité. En autre variante, il peut être prévu une articulation à base d'une bavette souple, notamment en textile.

Lorsqu'il est dit que le moyen de positionnement 7 est réversible, cela signifie qu'il peut être désactivé par l'utilisateur pour disposer la tablette 4 en position d'escamotage. En outre, il ne présente pas une résistance suffisante pour assurer un blocage efficace de la tablette 4 en position de recouvrement.

C'est pourquoi il faut prévoir un moyen de butée 8 permettant de remplir cette fonction, ledit moyen de butée présentant la résistance requise pour assurer le blocage attendu en position de recouvrement.

Selon la réalisation représentée, le moyen de positionnement 7 comprend au moins un cordon 9 - et en particulier deux cordons partant sensiblement des coins arrière 10 de la tablette 4 et rattachés en parties latérales médianes du hayon 3 - reliant la tablette 4 au hayon 3, ledit cordon étant disposé de sorte que :
- l'ouverture dudit hayon provoque une rotation de ladite tablette vers sa position d'accès,
- et la fermeture dudit hayon provoque une rotation de ladite tablette vers sa position de recouvrement,
ledit cordon étant fixé de manière réversible audit hayon et/ou à ladite tablette, afin de pouvoir être détaché par l'utilisateur pour disposer ladite tablette en position d'escamotage.

Selon la réalisation représentée, le moyen de butée 8 comprend une saillie 11, qui peut être issue d'un panneau de garnissage du hayon 3, ledit panneau étant réalisé par exemple à base de matériau plastique moulé, ladite saillie se positionnant sous la bordure arrière 13 de la tablette 4 lorsque ledit moyen de butée est activé.

Selon la réalisation représentée, le dispositif 1 comprend en outre un moyen de blocage 14 empêchant une rotation de la tablette 4 de sa position de recouvrement vers sa position d'accès, ledit moyen de blocage étant disposé sur le hayon 3 et étant activé par fermeture dudit hayon alors que ladite tablette est positionnée en position de recouvrement.

Selon la réalisation représentée, le moyen de blocage 14 comprend une excroissance 15, qui peut être issue d'un panneau de garnissage du hayon 3, ladite excroissance se positionnant sur la bordure arrière 13 de la tablette 4 lorsque ledit moyen de blocage est activé.

Selon la réalisation représentée, la position d'escamotage correspond à une mise en position sensiblement verticale de la tablette 4, venant en particulier se positionner contre les dossiers 16 de siège arrière.

De façon non représentée, le dispositif 1 comprend un moyen de maintien 17 réversible de la tablette en position d'escamotage, ledit moyen comprenant par exemple un élément magnétique, non représenté, prévu sur la tablette 4 et coopérant avec un élément magnétique réciproque prévu sur un dossier 16.

## Revendications

1. Dispositif (1) de recouvrement d'un compartiment (2) à bagages de véhicule automobile pourvu d'un hayon (3), ledit dispositif comprenant ledit hayon (3) et une tablette (4) recouvrement montée en articulation selon son bord avant (5) par rapport audit compartiment, ladite tablette présentant :
• une position d'accès aux bagages, où ladite tablette est inclinée par relèvement de son bord arrière (6),
• une position de recouvrement, où ladite tablette est sensiblement horizontale,
• une position d'escamotage, où ladite tablette est rabattue par abaissement dudit bord arrière,
ledit dispositif comprenant :
• un moyen de positionnement (7) réversible de ladite tablette en position de recouvrement,
• un moyen de butée (8) empêchant une rotation de ladite tablette de sa position de recouvrement vers sa position d'escamotage, ledit moyen de butée étant disposé sur ledit hayon et étant activé par fermeture dudit hayon alors que ladite tablette est positionnée par ledit moyen de positionnement en position de recouvrement.

2. Dispositif selon la revendication 1, **caractérisé en ce que** le moyen de positionnement (7) comprend au moins un cordon (9) reliant la tablette (4) au hayon (3), ledit cordon étant disposé de sorte que :
• l'ouverture dudit hayon provoque une rotation de ladite tablette vers sa position d'accès,
• et la fermeture dudit hayon provoque une rotation de ladite tablette vers sa position de recouvrement,
ledit cordon étant fixé de manière réversible audit hayon et/ou à ladite tablette.

3. Dispositif selon la revendication 1 ou 2, **caractérisé en ce que** le moyen de butée (8) comprend une saillie (11) se positionnant sous la bordure arrière (13) de la tablette (4) lorsque ledit moyen de butée est activé.

4. Dispositif selon l'une quelconque des revendications 1 à 3, **caractérisé en ce qu'**il comprend en outre un moyen de blocage (14) empêchant une rotation de la tablette (4) de sa position de recouvrement vers sa position d'accès, ledit moyen de blocage étant disposé sur le hayon (3) et étant activé par fermeture dudit hayon alors que ladite tablette est positionnée en position de recouvrement.

5. Dispositif selon la revendication 4, **caractérisé en ce que** le moyen de blocage (14) comprend une excroissance (15) se positionnant sur la bordure arrière (13) de la tablette (4) lorsque ledit moyen de blocage est activé.

6. Dispositif selon l'une quelconque des revendications 1 à 5, **caractérisé en ce que** la position d'escamotage correspond à une mise en position sensiblement verticale de la tablette (4).

7. Dispositif selon la revendication 6, **caractérisé en ce qu'**il comprend un moyen de maintien (17) réversible de la tablette (4) en position d'escamotage.

## Patentansprüche

1. Vorrichtung (1) zur Abdeckung eines Kofferraums (2) eines Kraftfahrzeugs, versehen mit einer Ladeklappe (3), wobei die Vorrichtung die Ladeklappe (3) und eine Abdeckplatte (4) umfasst, die gelenkig an ihrer vorderen Kante (5) mit Bezug auf den Raum montiert ist, wobei die Platte Folgendes umfasst:
- eine Position des Zugangs zu den Koffern, wobei die Platte durch das Hochheben ihres hinteren Rands (6) geneigt ist,
- eine Position der Abdeckung, in der die Platte im Wesentlichen horizontal ist,
- eine Position des Rückzugs, in der die Platte durch Absenken des hinteren Rands heruntergeklappt ist,
wobei die Vorrichtung Folgendes umfasst:
- ein Mittel zur umkehrbaren Positionierung (7) der Platte in der Position der Abdeckung,
- ein Anschlagmittel (8), das eine Drehung der Platte aus ihrer Position der Abdeckung in ihre Position des Rückzugs verhindert, wobei das Anschlagmittel auf der Ladeklappe angeordnet ist und durch den Verschluss der Ladeklappe aktiviert wird, während die Platte von dem Positionierungsmittel in der Position der Abdeckung angeordnet wird.

2. Vorrichtung nach Anspruch 1, **dadurch gekennzeichnet, dass** das Positionierungsmittel (7) mindestens eine Schnur (9) umfasst, die die Platte (4) und die Ladeklappe (3) miteinander verbindet, wobei die Schnur derart angebracht ist, dass
- die Öffnung der Ladeklappe eine Drehung der Platte in ihre Position des Zugangs hervorruft,
- und der Verschluss der Ladeklappe eine Drehung der Platte in ihre Position der Abdeckung hervorruft,
wobei die Schnur auf umkehrbare Weise an die Ladeklappe und/oder die Platte befestigt ist.

3. Vorrichtung nach Anspruch 1 oder 2, **dadurch gekennzeichnet, dass** das Anschlagmittel (8) einen Vorsprung (11) umfasst, der sich unter der hinteren Einfassung (13) der Platte (4) anordnet, wenn das Anschlagmittel aktiviert wird.

4. Vorrichtung nach einem der Ansprüche 1 bis 3, **dadurch gekennzeichnet, dass** sie außerdem ein Blockiermittel (14) umfasst, das eine Drehung der Platte (4) aus ihrer Position der Abdeckung in ihre Position des Zugangs verhindert, wobei das Blockiermittel auf der Ladeklappe (3) angeordnet ist und durch den Verschluss der Ladeklappe aktiviert wird, während die Platte in der Position der Abdeckung angeordnet wird.

5. Vorrichtung nach Anspruch 4, **dadurch gekennzeichnet, dass** das Blockiermittel (14) eine Protuberanz (15) umfasst, die sich auf der hinteren Einfassung (13) der Platte (4) anordnet, wenn das Anschlagmittel aktiviert ist.

6. Verfahren nach einem der Ansprüche 1 bis 5, **dadurch gekennzeichnet, dass** die Position des Rückzugs einer im Wesentlichen vertikalen Anordnung der Platte (4) entspricht.

7. Vorrichtung nach Anspruch 6, **dadurch gekennzeichnet, dass** sie ein umkehrbares Haltemittel (17) der Platte (4) in der Position des Rückzugs umfasst.

## Claims

1. Device (1) for covering a compartment (2) of a motor vehicle luggage provided with a tailgate (3), said device comprising said tailgate (3) and a shelf (4) mounted in articulation according to its leading edge (5) with respect to said compartment, said shelf having:
- a position of access to luggage, wherein said shelf is inclined by raising its rear edge (6),
- a covering position wherein said shelf is substantially horizontal,
- a retracted position, wherein said shelf is folded by lowering said rear edge,
said device comprising:
- a reversible positioning means (7) of said shelf in the covering position,
- stop means (8) preventing a rotation of said shelf from its covering position to its retracted position, said stop means being arranged on said tailgate and being activated by closing said tailgate when said shelf is positioned by said positioning means in the covering position.

2. Device according to claim 1, **characterised in that** the positioning means (7) comprises at least one cord (9) connecting the shelf (4) to the tailgate (3), said cord being arranged such that:
- the opening of the tailgate causes a rotation of said shelf to its access position,
- and the closing of said tailgate causes rotation of said shelf towards its closed position,
said cord being reversibly attached to said hatch and/or to said shelf.

3. Device according to claim 1 or 2, **characterised in that** the stop means (8) comprises a projection (11) being positioned under the rear edge (13) of the shelf (4) when said stop means is activated.

4. Device according to any one of claims 1 to 3, **characterised in that** it further comprises a locking means (14) preventing rotation of the shelf (4) from its covering position to its access position, said locking means being arranged on the tailgate (3) and being activated by closing said tailgate when said shelf is positioned in the covering position.

5. Device according to claim 4, **characterised in that** the locking means (14) comprises a protuberance (15) being positioned on the rear edge (13) of the shelf (4) when said locking means is activated.

6. Device according to any one of claims 1 to 5, **characterised in that** the retracted position corresponds to a substantially vertical position of the shelf (4).

7. Device according to claim 6, **characterised in that** it comprises reversible holding means (17) of the shelf (4) in retracted position.
